# EUROPÄISCHE PATENTSCHRIFT

(11) **EP 3 678 777 B1**
(45) Veröffentlichungstag und Bekanntmachung des Hinweises auf die Patenterteilung: **11.08.2021**
(21) Anmeldenummer: 18762504.1
(22) Anmeldetag: 30.08.2018
(51) Int. Cl.: B29C 45/38, B29C 45/44, B01L 3/00, B29C 45/33, B29C 45/27

(54) **VERFAHREN ZUR HERSTELLUNG EINES NAPFSTREIFENS**
METHOD FOR PRODUCTION OF A STRIP OF CONTAINERS
PROCÉDÉ DE FABRICATION D'UNE BANDE DE RÉCIPIENTS

(30) Priorität: 05.09.2017 DE 102017215528
(43) Veröffentlichungstag der Anmeldung: 15.07.2020
(73) Patentinhaber: Sarstedt AG & Co. KG, 51588 Nürnbrecht (DE)
(72) Erfinder: WEINSTOCK, Mark, 57612 Helmenzen (DE)
(74) Vertreter: Grosse, Wolf-Dietrich Rüdiger
(86) Internationale Anmeldenummer: PCT/EP2018/073369
(87) Internationale Veröffentlichungsnummer: WO 2019/048335

(56) Entgegenhaltungen:
- EP-A2- 0 688 602
- GB-A- 2 288 233
- US-A- 5 110 556
- US-A1- 2001 015 512
- US-A1- 2010 182 597
- US-A1- 2014 112 843

## Beschreibung

Die Erfindung betrifft ein Verfahren zum Herstellen mindestens eines Napfes, wie er in der pharmazeutischen Industrie in Mikrotitiersystemen Verwendung findet. Darüber hinaus betrifft die Erfindung einen mit dem Verfahren hergestellten Napf oder Napfstreifen.

Mikrotitiersysteme und zugehörige Näpfe sind im Stand der Technik grundsätzlich bekannt, so z. B. aus der europäischen Patentschrift EP 0 688 602 B1.

Die besagten Näpfe bestehen aus Kunststoff und werden traditionell mit einem Spritzgießverfahren hergestellt, wie es beispielsweise im Oberbegriff des Verfahrensanspruchs 1 beschrieben ist. Demnach erfolgt die Herstellung eines solchen Napfes mit einer Hinterschneidung an seiner Außenseite mit Hilfe eines Spritzgießwerkzeugs. Dieses Spritzgießwerkzeug weist einen Angusskanal, spritzseitige Komponenten und zumindest einen schließseitigen Kern für den Napf, einen Schieber mit Schieberelementen und einen Abstreifer als schließseitige Komponenten auf. Zum Herstellen des Napfes wird ein solches Spritzgießwerkzeug wie folgt betrieben:
Zunächst wird das Spritzgießwerkzeug durch Verfahren der schließseitigen Komponenten und der spritzseitigen Komponenten aufeinander zu geschlossen, wodurch in dem Spritzgießwerkzeug zwischen den Schieberelementen eine Kavität ausgebildet wird, welche eine Negativform für den Napf repräsentiert. Sodann wird flüssiger Kunststoff mit Hilfe einer Spritzgießmaschine durch den Angusskanal in die Kavität gepresst, um dort auszuhärten. Durch das Aushärten des Kunststoffes entsteht der Napf zusammen mit einem Anguss. Nach dem Aushärten wird das Spritzgießwerkzeug wieder geöffnet durch Verfahren der schließseitigen Komponenten zusammen mit dem Napf weg von den spritzseitigen Komponenten. Dabei wird der Anguss von dem Napf abgerissen und es werden die Schieberelemente auseinandergefahren, um den Napf mit seinen Hinterschneidungen freizugeben. Schließlich wird der Napf mit Hilfe des Abstreifers von dem schließseitigen Kern abgestreift, um danach für eine Entnahme aus dem Spritzgießwerkzeug zur Verfügung zu stehen.

Die besagte Hinterschneidung an der Außenseite eines einzelnen Napfes dient typischerweise als Anschlag beim Einsetzen des Napfes in eine Öffnung einer Mikrotitierplatte.

Das beschriebene bekannte Verfahren dient jedoch nicht nur zum Herstellen eines einzelnen Napfes, sondern auch zum Herstellen eines Napfstreifens, bei dem mehrere Näpfe über Verbindungsstege miteinander verbunden sind. Die bodennahen Enden der Verbindungsstege dienen typischerweise - ähnlich wie die Hinterschneidungen bei Einzelnäpfen - als Anschlag beim Einsetzen eines Napfstreifens in die Öffnungen einer Mikrotitierplatte.

Die Höhe der Verbindungsstege, gemessen in Längsrichtung eines Napfes, definiert die Festigkeit und Steifigkeit eines Napfstreifens. Anders ausgedrückt, definiert die Höhe der Verbindungsstege, wie leicht oder schwer einzelne Näpfe von dem Napfstreifen abgebrochen werden können oder wie leicht oder schwer ein Napfstreifen bricht, bei einer Biegung um seine Querachse. Es besteht der Wunsch, die Brechbarkeit zu erschweren, also Napfstreifen mit höheren Verbindungsstegen herzustellen.
Dem Wunsch nach einer möglichst großen Steghöhe sind jedoch fertigungstechnische Grenzen gesetzt. Diese Grenzen resultieren zum einen daraus, dass der Schieber in dem Spritzgießwerkzeug stets eine größere Höhe als die Hinterschneidung bzw. die Verbindungsstege aufweisen muss, um diese übergreifen zu können. Zum anderen sollte der Anspritzpunkt eines jeden Napfes an der Seite des Napfes kurz unterhalb des Bodens liegen, damit die Kavität gut befüllt und der Napf bzw. der Napfstreifen mit einer guten Qualität hergestellt werden kann.

Bei den bekannten Spritzgießwerkzeugen verläuft der Angusskanal typischerweise immer in deren spritzseitigen Komponenten und mündet von diesen spritzseitigen Komponenten in die Kavität. Weil der Anspritzpunkt, d. h. die Mündung des Angusskanals, an der Seite der Kavität vorgesehen ist, erstrecken sich die spritzseitigen Komponenten bei den bekannten Spritzgießwerkzeugen für Näpfe notwendigerweise - ausgehend von dem Boden der Näpfe - immer auch ein Stück weit über die Höhe der Näpfe. Damit steht - bei fest vorgegebener Gesamthöhe eines Napfes oder Napfstreifens - jedoch nicht mehr die Gesamthöhe, sondern nur noch der verbleibende Teil der Gesamthöhe des Napfes als Höhe für den Schieber zur Verfügung. Weil jedoch, wie gesagt, der Schieber die Hinterschneidungen bzw. die Verbindungsstege von ihrer Höhe her übergreifen muß, ist das oben beschriebene traditionelle Verfahren nur geeignet zum Herstellen von Näpfen mit einer begrenzten Hinterschneidungshöhe bzw. von Napfstreifen mit einer begrenzten Höhe der Verbindungsstege.

Die US-Patentanmeldung US 2001/0015512 A1 offenbart nahezu alle Merkmale des Oberbegriffs des Patentanspruchs 1. Die US-Patentanmeldung US 2014/0182597 A1 offenbart ebenfalls ein Verfahren zum Herstellen eines Napfes aus Kunststoff mit einer Hinterschneidung an seiner Außenseite, wobei der hohle Napf hergestellt wird durch Umspritzen eines schließseitigen Kerns mit dem Kunststoff und wobei der so hergestellte Napf, nach dem Aushärten des Kunststoffes mit Hilfe eines Abstreifers von dem schließseitigen Kern abgezogen bzw. abgestreift wird.

Die japanische Patentanmeldung JP 2005 262781 A offenbart sämtliche Verfahrensschritte des Oberbegriffs des Anspruchs 1.

EP 0 688 602A2, US 5 110556 A und US2014/112843 A1 offenbaren Beispiele bekannter Napfstreifen.

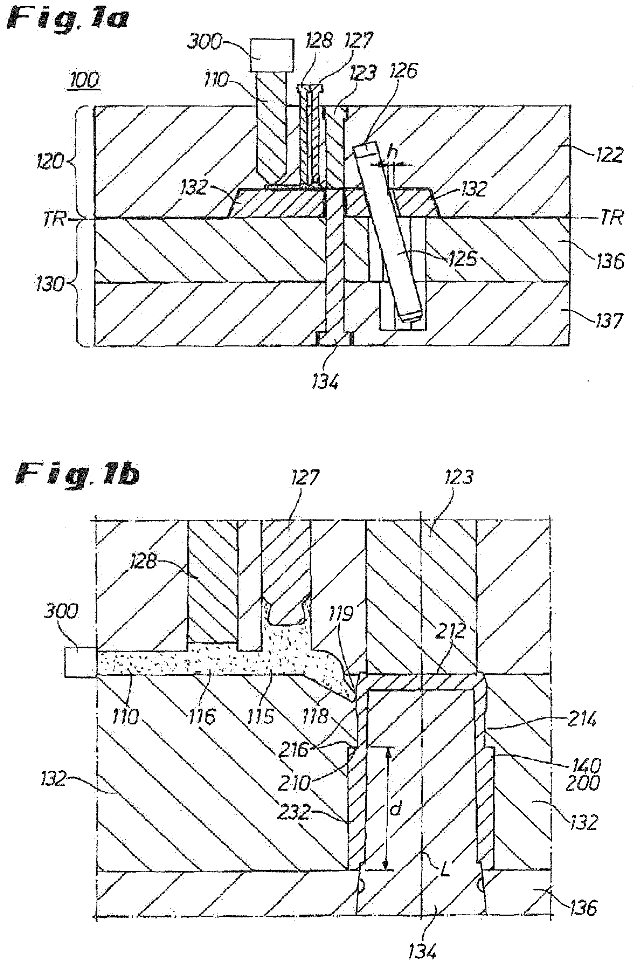

Der Erfindung liegt die Aufgabe zugrunde, ein bekanntes Verfahren zum Herstellen mindestens eines Napfes aus Kunststoff mit einer Hinterschneidung mit Hilfe eines Spritzgießwerkzeugs dahingehend weiterzubilden, dass auch ein Napf mit einer größeren Hinterschneidungshöhe hergestellt werden kann bzw. dass auch Napfstreifen mit höheren Verbindungsstegen hergestellt werden können.
Diese Aufgabe wird verfahrenstechnisch durch das in Patentanspruch 1 beanspruchte Verfahren gelöst.
Das erfindungsgemäße Verfahren sieht die Verwendung von Spritzgießwerkzeugen vor, bei denen der letzte Abschnitt des Angusskanals nicht in den spritzseitigen Komponenten, sondern in dem Schieber ausgebildet ist und dass der Angusskanal von dort aus in die Kavität mündet. Dies bietet den Vorteil, dass der Schieber deutlich höher bauen kann als im Stand der Technik und dass aufgrund der größeren Bauhöhe des Schiebers mit dem beanspruchten Verfahren auch Näpfe mit - im Vergleich zum Stand der Technik - höheren Hinterschneidungen bzw. Napfstreifen mit höheren Verbindungsstegen, jeweils beispielhaft bezogen auf die Gesamthöhe eines Napfes oder Napfstreifens, hergestellt werden können. Die so hergestellten Napfstreifen sind vorteilhafterweise weniger leicht brechbar. Bei der vorliegenden Beschreibung beziehen sich die Begriffe "(nach) oben, oberhalb, (nach) unten, unterhalb" stets auf die in den Figuren gezeigten Anordnungen oder auf die in Figur 1 gezeigte Trennlinie zwischen den spritzseitigen und den schließseitigen Komponenten des Spritzgießwerkzeugs. Die spritzseitigen und die schließseitigen Komponenten bewegen sich typischerweise, aber nicht zwingend notwendig, entlang der Längsrichtung der Kavität relativ zueinander aufeinander zu oder voneinander weg. Die Schieberelemente verfahren typischerweise, aber nicht zwingend notwendig, quer zu dieser Längsachse relativ zueinander.
Die Schieberelemente werden beim Öffnen des Spritzgießwerkzeuges erst dann auseinandergefahren, nachdem der Anguss zuvor durch das Auseinanderfahren der spritzseitigen und schließseitigen Komponenten entlang der Längsachse von dem Napf abgerissen und aus dem Abschnitt des Angusskanals in dem Schieber herausgezogen wurde. Erst durch diese beanspruchte Verzögerung zwischen dem Querverfahren der Schieberelemente und dem Auseinanderfahren der spritzseitigen und schließseitigen Komponenten in Richtung der Längsachse wird gewährleistet, dass der in dem Abschnitt des Angusskanals in dem Schieber befindliche Teil des Angusses dort herausgezogen wird. Ohne die beanspruchte Verzögerung, d. h. wenn die Schieberelemente und die spritzseitigen und die schließseitigen Komponenten zeitgleich auseinanderfahren würden, dann würde der in dem Schieber befindliche Teil des Angusses von dem außerhalb des Schiebers befindlichen Teil des Angusses abgeschert werden. Eine Entfernung des in dem Schieber verbliebenen Teils des Angusses aus dem dortigen Abschnitt des Angusskanals und damit eine Wiederholung des Verfahrens zur Herstellung weiterer Näpfe bzw. Napfstreifen wäre nicht mehr möglich.
Vorteilhafterweise lassen sich mit dem erfindungsgemäßen Verfahren Näpfe herstellen, deren Hinterschneidungen eine Höhe aufweisen zwischen 3,5 und 10 mm, vorzugsweise zwischen 7,0 und 10 mm. Für die Verbindungsstege zwischen zwei benachbarten Näpfen bei einem Napfstreifen gelten dieselben Höhenbereichsangaben .
Die Näpfe können an ihrer Außenseite mindestens eine Aussparung aufweisen, wobei die Aussparung insbesondere für eine lösbare Verrastung der Näpfe in der Öffnung einer Mikrotitierplatte dient. Bei einzelnen Näpfen können die Aussparungen im Höhenbereich der Hinterschneidung oder außerhalb der Hinterschneidung liegen. Bei Napfstreifen können die Aussparungen der einzelnen Näpfe im Höhenbereich der Verbindungsstege oder außerhalb der Verbindungsstege ausgebildet sein.

Die Aussparungen sind typischerweise in Form einer an der Außenseite der Näpfe vollumfänglich oder zumindest abschnittsweise umlaufenden Nut ausgebildet.

Obere oder untere Begrenzungswände der Aussparungen können abgeschrägt oder abgerundet ausgebildet sein. Eine abgerundete Ausbildung erleichtert die Entnahme der Näpfe oder Napfstreifen aus der Verrastung in einer Mikrotitierplatte.

Weitere vorteilhafte Ausgestaltungen des Verfahrens und des Napfes bzw. Napfstreifens sind Gegenstand der abhängigen Ansprüche.

Der Beschreibung sind die folgenden Figuren beigefügt, wobei
- Figur 1a: den Ausgangspunkt des erfindungsgemäßen Verfahrens in Form eines geschlossenen Spritzgießwerkzeugs;
- Figur 1b: eine Detailansicht zu Figur 1a;
- Figur 2a: einen ersten Schritt des erfindungsgemäßen Verfahrens;
- Figur 2b: eine Detailansicht zu Figur 2a;
- Figur 3a: einen zweiten Schritt des erfindungsgemäßen Verfahrens;
- Figur 3b: eine Detailansicht zu Figur 3a;
- Figur 4: einen dritten Schritt des erfindungsgemäßen Verfahrens;
- Figur 5: einen vierten Schritt des erfindungsgemäßen Verfahrens;
- Figur 6: einen mit dem erfindungsgemäßen Verfahren hergestellten Napfstreifen; und
- Figur 7: einen Längsschnitt durch den Napfstreifen nach Fig. 6 zeigt.

Die Erfindung wird nachfolgend unter Bezugnahme auf die genannten Figuren in Form von Ausführungsbeispielen detailliert beschrieben. In allen Figuren sind gleiche technische Elemente mit gleichen Bezugszeichen bezeichnet.

Figuren 1a und 1b zeigen das bei dem erfindungsgemäßen Verfahren verwendete Spritzgießwerkzeug 100 in geschlossenem Zustand. D. h. seine spritzseitigen und schließseitigen Komponenten 120, 130 sind aufeinander zu verfahren. Zu den spritzseitigen Komponenten 120 oberhalb der Trennlinie TR gehören bei dem in den Figuren 1a und 1b gezeigten Ausführungsbeispiel eine Schieberplatte 122 mit einem darin eingelassenen spritzseitigen Kern 123 für einen herzustellenden Napf 200. Weiterhin ist in der Schieberplatte 122 ein erster Abschnitt 116 des Angusskanals 110 ausgebildet. Außerdem gehört zu den schließseitigen Komponenten 120 beispielsweise auch ein Schrägbolzen 125, welcher in einer schrägen Sackbohrung 126 in der Schieberplatte 122 fixiert ist.

Neben diesen spritzseitigen Komponenten 120 umfasst das erfindungsgemäß verwendete Spritzgießwerkzeug 100 weiterhin auch folgende schließseitigen Komponenten: Einen Abstreifer 136, beispielhaft in Form einer Abstreiferplatte ausgebildet, und einen in dem Abstreifer verschiebbar gelagerten schließseitigen Kern 134 für den Napf 200. Der Abstreifer 136 weist eine Öffnung auf zur Aufnahme des Schrägbolzens 125 mit einem vorbestimmten Spiel bzw. Freihub h. Auf dem Abstreifer 136 sind zwei Schieberelemente 132 bzw. Schieberhälften quer zu der Längsrichtung L verschiebbar gelagert. Der schließseitige Kern 134 für den Napf 200 ist an seinem napffernen Ende von einer Kernhalteplatte 137 gehalten.

Bei dem in den Figuren 1a und 1b gezeigten geschlossenen Zustand des Spritzgießwerkzeugs 100 sind die schließseitigen und spritzseitigen Komponenten 120, 130 so weit aufeinander zu verfahren, dass sie sich berühren. Insbesondere schlagen die Schieberelemente 132 an die Schieberplatte 122 an. Zwischen den Schieberelementen 132 - und weiterhin begrenzt durch den schließseitigen Kern 123 und den spritzseitigen Kern 134 - ist in dem geschlossenen Spritzgießwerkzeug eine Kavität 140 ausgebildet, welche eine Negativform für den herzustellenden Napf 200 repräsentiert.

Neben dem ersten Abschnitt 116 des Angusskanals 110, hier nur beispielhaft als in der Schieberplatte 122 ausgebildet gezeigt, ist ein zweiter Abschnitt 118 des Angusskanals in dem Schieber 132 erkennbar, welcher in die Kavität 140 mündet. Der Schrägbolzen 125 steht einem Schließen des Spritzgießwerkzeugs 100 nicht entgegen, denn er ragt mit seinem freien Ende in Öffnungen in den Schieberelementen 132, in dem Abstreifer 136 und eventuell auch in der Kernhalteplatte 137 ein.

Das erfindungsgemäße Verfahren zum Herstellen mindestens eines Napfes oder eines Napfstreifens aus Kunststoff mit einer Hinterschneidung an seiner Außenseite weist folgende Schritte auf:
Nach dem Schließen des Spritzgießwerkzeugs 100 wird die darin ausgebildete Kavität 140 mit flüssigem Kunststoff befüllt. Konkret wird der flüssige Kunststoff dazu mit Hilfe einer Spritzgießmaschine 300 zunächst durch den ersten Abschnitt 116 des Angusskanals 110, in den Figuren 1a und 1b beispielhaft auf der Spritzseite ausgebildet, nachfolgend durch einen zweiten Abschnitt 118 des Angusskanals in dem Schieber 132 und von dort in die Kavität 140 gepresst. In Figur 1b sind die beiden Abschnitte des Angusskanals gut zu erkennen. Es ist auch gut zu erkennen, dass der Anspritzpunkt 119 an der Seite des Napfes 200 bzw. der Kavität 140 unterhalb des Bodens 212 des Napfes angeordnet ist.

Der Kunststoff härtet dann in der Kavität 140 und dem Angusskanal 110 aus; in dem Napf kommt es dadurch zur Ausbildung des Napfes 200 und in den beiden Abschnitten 116 und 118 des Angusskanals kommt es durch das Aushärten des Kunststoffes zur Ausbildung des Angusses 115. Der Napf 200 und der Anguss 115 sind zunächst einstückig miteinander ausgebildet.

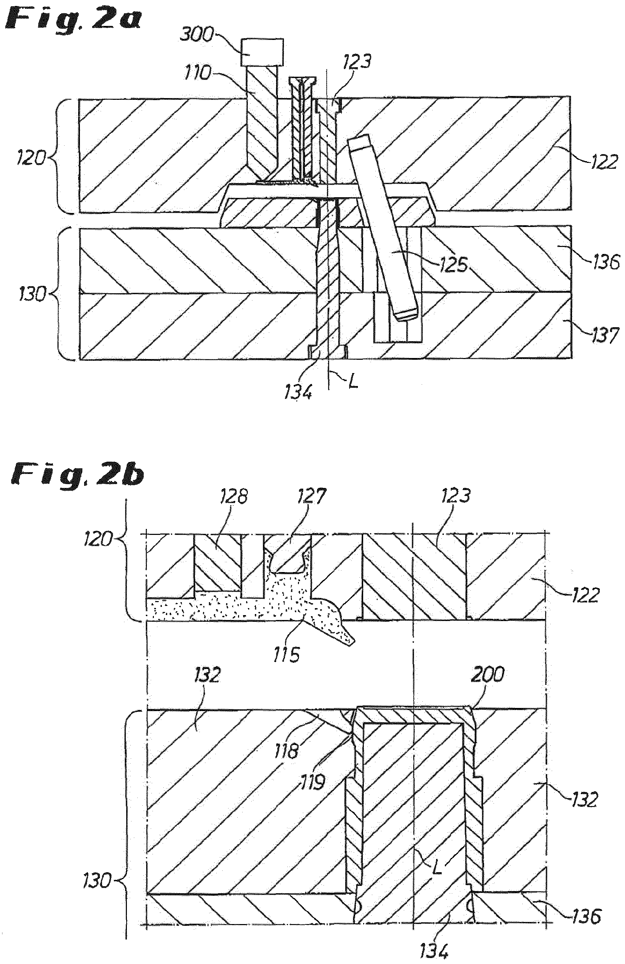

In einem nachfolgenden Verfahrensschritt, wie er in den Figuren 2a und 2b dargestellt ist, werden die schließseitigen Komponenten 130 und die spritzseitigen Komponenten 120 beispielhaft entlang der Längsachse L auseinandergefahren. Dabei reißt der Napf 200 in dem Anspritzpunkt 119 von dem Anguss 115 ab. Der Anguss 115 wird dabei aus dem zweiten Abschnitt 118 des Angusskanals 110 herausgezogen und er verbleibt zunächst in dem ersten Abschnitt 116 des Angusskanals 110 auf der Spritzgießseite. Dort wird der Anguss 115 mit Hilfe der in Figur 2b erkennbaren Hinterschneidungen von einem Angusshaltestift 127 gehalten.

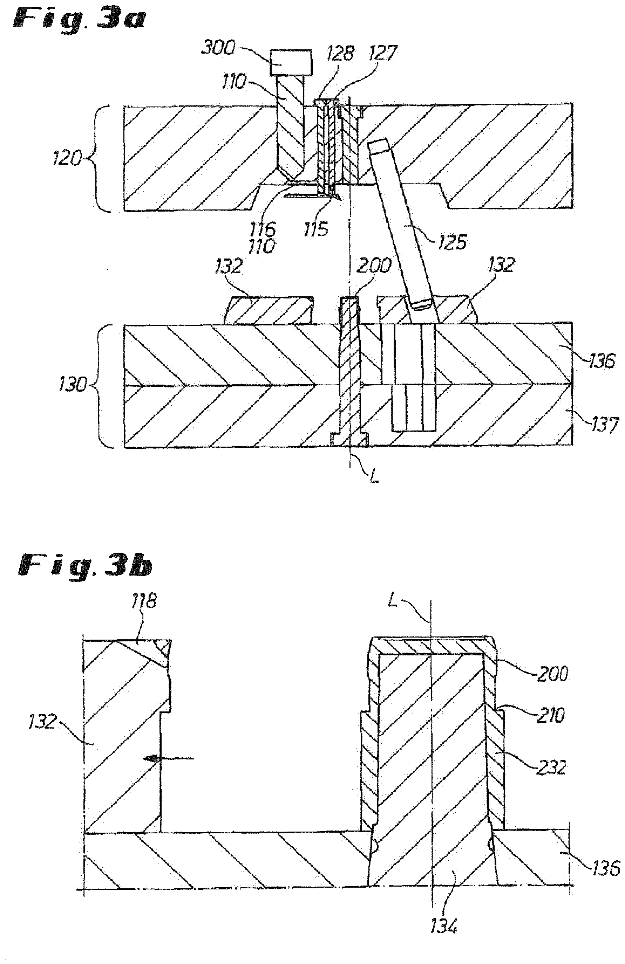

Die Figuren 3a und 3b veranschaulichen den nachfolgenden Verfahrensschritt, wonach erst nach dem Abreißen des Angusses 115 aus dem Schieber 132 die Schieberelemente 132 beidseitig des Napfes 200 auf dem Abstreifer 136 bzw. der Abstreiferplatte quer zur Längsrichtung L auseinandergefahren werden. Das Auseinanderfahren erfolgt, um den Napf 200 mit seinen Hinterschneidungen 210 bzw. den Napfstreifen 200' mit seinen Verbindungsstegen 232 für einen nachfolgenden Auswurf freizugeben.

Figur 3b zeigt, dass die napfseitige Kontur der Schieberelemente 132 komplementär zu der Außenkontur des Napfes 200 ausgebildet ist.

Eine Zusammenschau der Bilder 1a, 2a und 3a zeigt, wie sich die Relativposition des in der Schieberplatte 122 ortsfest eingespannten Schrägbolzens 125 innerhalb der Öffnungen der Schieberelemente 132, des Abstreifers 136 und eventuell auch in der Kernhalteplatte 137 mit zunehmendem Auseinanderfahren der spritzseitigen und der schließseitigen Komponenten 120, 130 verändert. In den Figuren 1a und 2a verändert sich zwar jeweils die Relativposition; es kommt jedoch nicht zu einer Verschiebung von insbesondere den Schieberelementen 132, weil sich der Schrägbolzen 125 noch innerhalb des ihm in der Öffnung der Schieberelemente zugestandenen Freihubs h bewegt. Erst wenn die schließseitigen und spritzseitigen Komponenten 120, 130 in Längsrichtung L so weit auseinandergefahren sind, wie in Figur 3a gezeigt, dann ist der Freihub h aufgebraucht und es kommt bei dem weiteren Auseinanderfahren der Komponenten 120, 130 in Längsrichtung L aufgrund der Schrägstellung des Schrägbolzens 125 zu dem Querverschieben der Schieberelemente 132 und damit zu dem Öffnen der Kavität 140, wie in Figur 3a gezeigt.

Wichtig ist, dass das besagte Auseinanderfahren der Schieberelemente 132 nicht bereits zu Beginn des Auseinanderfahrens der Komponenten 120, 130 erfolgt, weil dies zu einem unerwünschten Abscheren des in dem zweiten Abschnitt 118 des Angusskanals befindlichen Teils des Angusses von dem in dem ersten Abschnitt 116 befindlichen Teil des Angusses käme. Ein solches Abscheren ist deshalb unerwünscht, weil dann der in dem Schieber verbliebene Teil des Angusses 115 nicht mehr aus dem zweiten Abschnitt 118 des Angusskanals entfernt werden könnte.

Um dies zu vermeiden ist die besagte (Zeit-) Verzögerung zwischen dem Auseinanderfahren der Komponenten 120, 130 und dem Auseinanderfahren der Schieberelemente 132 besonders wichtig. Selbstverständlich kann die besagte Verzögerung auch anders als durch den hier beispielhaft gezeigten Schrägbolzen 125 erfolgen. Denkbar sind grundsätzlich beliebige andere mechanische, hydraulische oder elektronische Lösungen.

Weiterhin ist in Figur 3a zu erkennen, dass der Anguss 115 mit Hilfe eines Angussauswurfstiftes 128 aus dem ersten Abschnitt 116 des Angusskanals herausgedrückt wurde. Er wird allerdings immer noch von dem Angusshaltestift 127 gehalten.

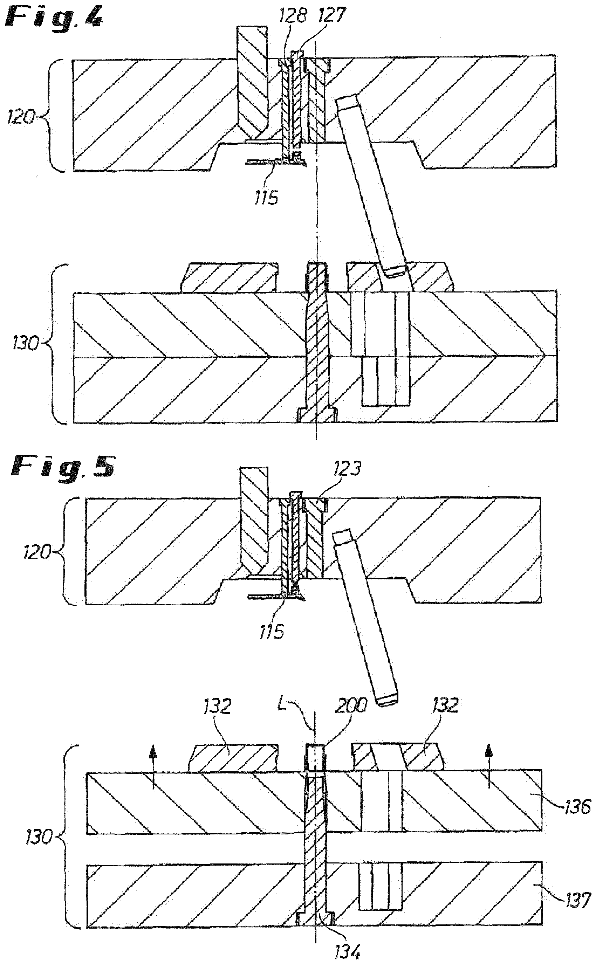

Figur 4 zeigt den nächsten Verfahrensschritt, in welchem der Angusshaltestift 127 von dem Anguss 115 getrennt wird, indem er von dem Anguss 115 nach oben abgezogen wird, während der Anguss 115 gleichzeitig durch den Angussauswurfstift 128 in seiner Auswurfposition gehalten wird.

Figur 5 zeigt einen letzten Verfahrensschritt, wonach der Napf 200 von dem schließseitigen Kern 134 abgestreift wird. Wie in Figur 5 gezeigt, erfolgt dies, indem der Abstreifer 136 bzw. die Abstreiferplatte relativ zu der Kernhalteplatte 137 in Längsrichtung L nach oben verfahren wird. Der Rand der Öffnung für den schließseitigen Kern 134 in dem Abstreifer 136 ist dabei so ausgebildet, dass er von unten an dem Öffnungsrand des Napfes 200 angreift und dadurch den Napf 200 bei seiner Bewegung in Längsrichtung L nach oben von dem schließseitigen Kern 134 abstreift. Sowohl der Anguss 115 wie auch der Napf 200 werden nachfolgend aus dem Spritzgießwerkzeug ausgeworfen.

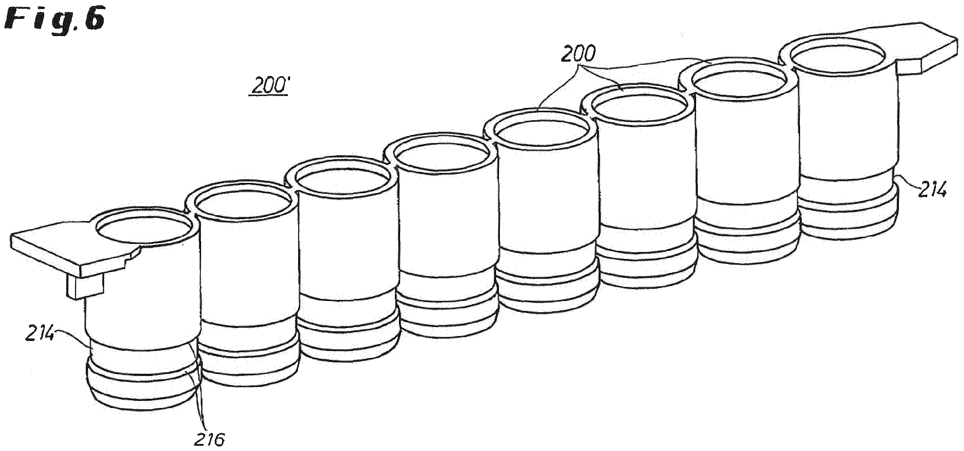

Figur 6 zeigt ein Beispiel für einen nach dem erfindungsgemäßen Verfahren hergestellten Napfstreifen 200'. Er besteht aus einer Mehrzahl von in einer Linie benachbart zueinander angeordneten einzelnen Näpfen 200. An den Außenseiten der Näpfe sind Aussparungen 214 zu erkennen; diese dienen zum Einrasten der Näpfe 200 bzw. des Napfstreifens 200' in die Öffnungen einer Mikrotitierplatte. Die Aussparungen sind hier beispielhaft in Form einer umlaufenden Nut ausgebildet. Die oberen und unteren Begrenzungswände 216 der Aussparung 214 können jeweils grade oder wie in Figur 6 gezeigt, abgeschrägt oder abgerundet ausgebildet sein.

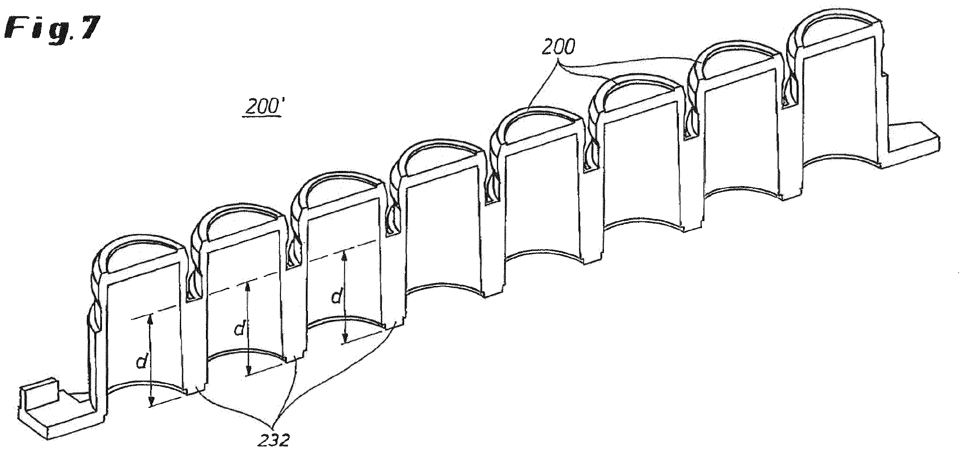

Figur 7 zeigt einen Längsschnitt durch den Napfstreifen 200'. Besonders gut sind hier die Verbindungsstege 232 zu erkennen, mit welchen die einzelnen Näpfe 200 miteinander verbunden sind. Diese Verbindungsstege haben jeweils eine Höhe d. Erst das erfindungsgemäße Verfahren ermöglicht eine Ausbildung dieser Steghöhe in einem Höhenbereich von 3,5 mm < d < 10 mm, vorzugsweise 7,0 mm < d < 10 mm, jeweils gemessen von dem Rand der Öffnungen der Näpfe 200 aus.

### Bezugszeichenliste

- 100: Spritzgießwerkzeug
- 110: Angusskanal
- 115: Anguss
- 116: erster Abschnitt des Angusskanals
- 118: zweiter Abschnitt des Angusskanals
- 119: Anspritzpunkt
- 120: spritzseitige Komponente
- 122: Schieberplatte
- 123: spritzseitiger Kern
- 125: Schrägbolzen
- 126: Sackbohrung
- 127: Angusshaltestift
- 128: Angussauswurfstift
- 130: schließseitige Komponenten
- 132: Schieber / Schieberelement
- 134: schließseitiger Kern
- 136: Abstreifer
- 137: Kernhalteplatte
- 140: Kavität
- 200: Napf
- 200': Napfstreifen
- 210: Hinterschneidung
- 212: Boden des Napfes
- 214: Aussparung
- 216: Begrenzungswände
- 230: Napfstreifen
- 232: Verbindungsstege
- 300: Spritzgießmaschine
- L: Längsrichtung
- TR: Trennlinie
- h: Freihub
- d: Höhe der Verbindungsstege

## Patentansprüche

1. Verfahren zum Herstellen mindestens eines Napfes (200) aus Kunststoff mit einer Hinterschneidung (210) an seiner Außenseite mit Hilfe eines Spritzgießwerkzeugs (100), welches einen Angusskanal (110), spritzseitige Komponenten (120) und zumindest einen Schieber (132) mit Schieberelementen (132) und einen Abstreifer (136) als schließseitige Komponenten (130) aufweist, wobei das Verfahren folgende Schritte aufweist:
Schließen des Spritzgießwerkzeugs (100) durch Verfahren der schließseitigen Komponenten (130) und der spritzseitigen Komponenten (120) relativ zueinander aufeinander zu, wodurch in dem Spritzgießwerkzeug (100) zwischen den Schieberelementen (132) eine Kavität (140) ausgebildet wird, welche eine Negativform für den Napf (200) repräsentiert;
Pressen von flüssigem Kunststoff mit Hilfe einer Spritzgießmaschine (300) durch einen Abschnitt (118) des Angusskanals (110) in dem Schieber (132) und aus dem Schieber in die Kavität (140), wobei ein Anspritzpunkt (119) an der Seite des Napfes (200) bzw. der Kavität (140) unterhalb des Bodens (212) angeordnet ist;
Aushärtenlassen des Kunststoffs in der Kavität (140) zur Ausbildung des Napfes (200) zusammen mit einem Anguss (115);
Öffnen des Spritzgießwerkzeugs (100) durch Auseinanderfahren der schließseitigen Komponenten (130) zusammen mit dem Napf (200) und der spritzseitigen Komponenten (120) relativ zueinander, wobei der Anguss (115) von dem Napf (200) abgerissen wird, wobei die Schieberelemente (132) auseinandergefahren werden zum Freigeben der Hinterschneidung (210) an dem Napf (200); und wobei die Schieberelemente (132) beim Öffnen des Spritzgießwerkzeugs (100) erst dann auseinandergefahren werden, nachdem der Anguss (115) zuvor von dem Napf (200) abgerissen und aus dem Abschnitt (118) des Angusskanals (110) in dem Schieber (132) herausgezogen wurde,
**dadurch gekennzeichnet,**
**dass** eine Mehrzahl von Näpfen (210) in Form eines Napfstreifens (230) hergestellt wird, wobei die einzelnen Näpfe über Verbindungsstege (232) miteinander verbunden sind;
**dass** die Hinterschneidungen (210) bzw. die Verbindungsstege - beispielsweise ausgehend von dem Rand der Öffnungen der Näpfe (210) - in Längsrichtung (L) der Näpfe eine Höhe d aufweisen für welche gilt:
3,5mm < d < 10mm, vorzugsweise 7,0mm < d < 10 mm; und
**dass** der Napfstreifen (230) von einem schließseitigen Kern (134) als weiterer schließseitiger Komponente mit Hilfe des Abstreifers (136) abgestreift wird.

## Claims

1. A method for producing at least one well (200) of plastic with an undercut (210) on its outer side with the aid of an injection mould (100), which comprises a sprue runner (110), injection-side components (120) and at least one slider (132) with slider elements (132) and a stripper (136) as closure-side components (130), wherein the method comprises the following steps:
closing the injection mould (100) by moving together the closure-side components (130) and the injection-side components (120) relative to one another such that a cavity (140) representing a counterpart for the well (200) is formed in the injection mould (100) between the slider elements (132);
pressing liquid plastic through a section (118) of the sprue runner (110) in the slider (132) and from the slider into the cavity (140) with the aid of an injection moulding machine (300), wherein an injection point (119) is respectively arranged on the side of the well (200) or the cavity (140) underneath the base (212) ;
allowing the plastic to harden in the cavity (140) in order to form the well (200) together with a sprue (115) ;
opening the injection mould (100) by moving apart the closure-side components (130) together with the well (200) and the injection-side components (120) relative to one another, wherein the sprue (115) is torn off the well (200), wherein the slider elements (132) are moved apart in order to release the undercut (210) on the well (200); and wherein the slider elements (132) are during opening of the injection mould (100) only moved apart after the sprue (115) has been torn off the well (200) and pulled out of the section (118) of the sprue channel (110) in the slider (132),
**characterized in**
**that** a plurality of wells (210) are produced in the form of a well strip (230), wherein the individual wells are connected to one another by means of connecting pieces (232);
in that the undercuts (210) or the connecting pieces respectively have - e.g. starting from the edge of the opening of the wells (210) - a height d in the longitudinal direction (L) of the wells, wherein the following applies to said height:
3.5 mm < d < 10 mm, preferably 7.0 mm < d < 10 mm; and
in that the well strip (230) is stripped off an additional closure-side component in the form of a closure-side core (134) with the aid of the stripper (136) .

## Revendications

1. Procédé, destiné à fabriquer au moins une coupelle (200) en matière plastique dotée sur sa face extérieure d'une contre-dépouille (210), à l'aide d'un moule d'injection (100), lequel comporte un conduit d'arrachage (110), des composants (120) du côté injection et au moins un coulisseau (132) pourvu d'éléments coulissants (132) et un racleur (136) en tant que composants (130) du côté fermeture, le procédé comportant les étapes suivantes consistant à :
fermer le moule d'injection (100) en déplaçant les uns par rapport aux autres les composants (130) du côté fermeture et les composants (120) du côté injection, suite à quoi, il se forme dans le moule d'injection (100) une cavité (140) entre les éléments coulissants (132), laquelle représente une forme négative pour la coupelle (200) ;
presser une matière plastique à l'aide d'une machine de moulage par injection (300) à travers un tronçon (118) du conduit d'arrachage (110) dans le coulisseau (132) et hors du coulisseau dans la cavité (140), un point d'injection (119) sur le côté de la coupelle (200) ou de la cavité (140) étant placé en-dessous du fond inférieur (212) ;
laisser se solidifier la matière plastique dans la cavité (140) pour créer la coupelle (200) conjointement avec une carotte (115) ;
ouvrir le moule d'injection (100) en écartant les uns des autres les composants (130) du côté fermeture, conjointement avec la coupelle (200) et les composants (120) du côté injection, la carotte (115) s'arrachant de la coupelle (200), les éléments coulissants (132) s'écartant pour libérer la contre-dépouille (210) sur la coupelle (200) ; et lors de l'ouverture du moule d'injection (100), les éléments coulissants (132) n'étant écartés les uns des autres qu'une fois que la carotte (115) ait été précédemment arrachée de la coupelle (200) et tirée hors du tronçon (118) du conduit d'arrachage (110) dans le coulisseau (132),
**caractérisé**
**en ce que** l'on fabrique une pluralité de coupelles (210) sous la forme d'un ruban de coupelles (230), les coupelles individuelles étant reliées les unes aux autres par l'intermédiaire de barrettes de liaison (232) ;
**en ce que** les contre-dépouilles (210) ou les barrettes de liaison (en partant par exemple du bord des ouvertures des coupelles (210)) présentent dans la direction longitudinale (L) des coupelles une hauteur d pour laquelle il s'applique :
3,5 mm < d < 10 mm, de préférence 7,0 mm < d < 10 mm ; et
**en ce que** l'on dévêtit le ruban de coupelles (230) d'un noyau (134) du côté fermeture en tant que composant supplémentaire du côté fermeture à l'aide du racleur (136).
